# EUROPEAN PATENT SPECIFICATION

(11) **EP 1 256 514 B1**
(45) Date of publication and mention of the grant of the patent: **09.09.2009**
(21) Application number: 01304191.8
(22) Date of filing: 10.05.2001
(51) Int. Cl.: B62J 1/02

(54) **Bicycle saddle having a shock-absorbing structure**
Fahrradsattel mit stossdämpfender Struktur
Selle de bicyclette avec amortisseur de chocs

(43) Date of publication of application: 13.11.2002
(73) Proprietor: Yu, Tsai-Yun, Ta Chia Chen, Taichung Hsien (TW)
(72) Inventor: Yu, Tsai-Yun, Ta Chia Chen, Taichung Hsien (TW)
(74) Representative: Giles, Ashley Simon

(56) References cited:
- EP-A- 1 078 846
- US-A- 5 775 710
- US-A- 6 007 148

## Description

### FIELD OF THE INVENTION

The present invention relates generally to a bicycle saddle, and more particularly to a bicycle saddle having a shock-absorbing structure.

### BACKGROUND OF THE INVENTION

The conventional bicycle saddle has a narrow front end and a wide rear end which is the saddle main body. The main body is provided in the bottom with a metal bar which is curved to form a support frame having a U-shaped loop portion and two support arms extending from the loop portion. The loop portion is fixed at the underside of the front end of the main body such that the rear ends of the two support arms are fastened securely with two sides of the underside of the rear end of the main body, with the midsegment of the support arm being separated from the underside of the main body by a distance and fastened with the seat post of the bicycle frame. Two metal coil springs are held between the rear of the bottom of the main body and the two support arms for absorbing the shock brought about by the bicycle in motion. Such conventional bicycle saddle as described above is defective in design in that the metal coil springs are incapable of absorbing shock efficiently, and that the metal coil springs give an added weight to the saddle. In light of the coil springs being fastened at two ends with the main body and the support frame by means of screws, the metal coil springs are apt to make noise by friction at the time when the coil springs are compressed and decompressed to bring about the shock-absorbing effect.

US6007148 and US5775710, both disclose a shock-absorbing bicycle saddle according to the preamble of claim 1, comprising a support frame formed of two steel bars with hooked rears ends, coupled to the main body by a screw into a fastening post mounted on the main body. A separate bridge member provides a link between the two steel bars.

EP1078846 discloses a shock-absorbing bicycle saddle, comprising a support structure, an annular seat, and a connecting part coupled to the main body by a screw and nut.

### SUMMARY OF THE INVENTION

It is the primary objective of the present invention to provide a bicycle saddle with a means to absorb shock uniformly and effectively.

It is another objective of the present invention to provide a bicycle saddle with a shock-absorbing structure which is simple in construction and light in weight.

It is still another objective of the present invention to provide a bicycle saddle with a shock-absorbing structure which is quiet while in operation.

In keeping with the principle of the present invention, the foregoing objectives of the present invention are attained by the bicycle saddle as defined in claim 1 comprising a main body on which a bicyclist is seated. The main body is provided at the bottom with a support frame, which is made of a metal bar by bending and is provided with a U-shaped loop portion and two support arms extending from the loop portion. The loop portion is fastened with the underside of the narrow front end of the main body. The two support arms are joined with the bicycle frame such that the two support arms are separated from the underside of the main body by an appropriate distance. The support arms are fastened at the rear end with a connection seat. Two elastic block bodies are held between the connection seat and the wide rear end of the main body such that the block bodies are respectively connected at the top and the bottom thereof with the underside of the main body and the top of the connection seat, and that the block bodies are elastically compressed by an external force exerting thereon. The two block bodies serve as means to absorb shock that is brought about between the main body and the bicycle frame.

### BRIEF DESCRIPTION OF THE DRAWINGS

FIG. 1 shows a perspective view of a preferred embodiment of the present invention in combination.
FIG. 2 shows an exploded view of the preferred embodiment of the present invention.
FIG. 3 shows a sectional view taken along the direction indicated by a line 3-3 as shown in FIG. 1.
FIG. 4 is similar to FIG. 3 for showing the bicycle saddle and the bicycle frame being exerted on in relation to each other.

### DETAILED DESCRIPTION OF THE INVENTION

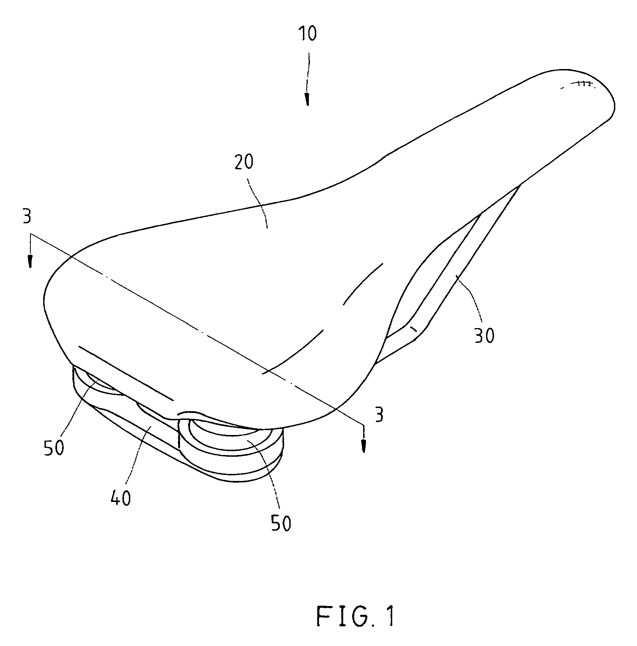

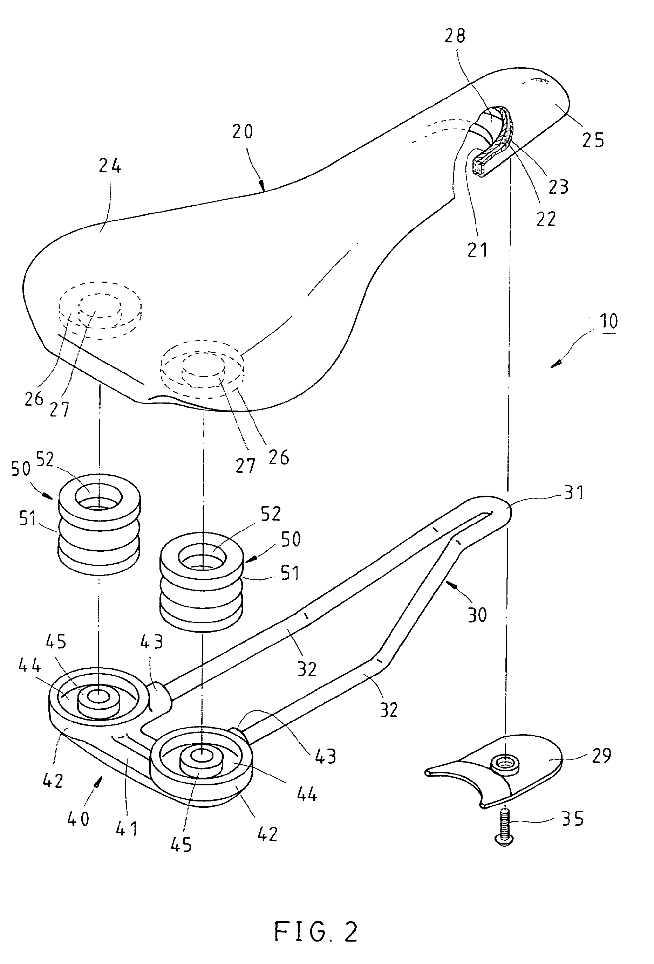

As shown in FIGS. 1-3, a bicycle saddle 10 embodied in the present invention is formed of a main body 20, a support frame 30, a connection seat 40, and two elastic block bodies 50.

The main body 20 is similar in construction to that of the conventional bicycle saddle and is formed of an inner shell 21 of a rigid plastic material, a middle layer 22 of a foam material, and a surface layer 23 of a fabric material. The main body 20 has a wide rear end 24 and a narrow front end 25. The main body 20 is provided in two opposite sides of the underside of the wide rear end 22 with a round upper insertion slot 26 which is in turn provided at the center thereof with a protruded pillar 27. The main body 20 is provided in the underside of the narrow front end 25 thereof with a connection slot 28.

The support frame 30 is made of a metal bar by bending and is provided at the center with a U-shaped loop portion 31, and two support arms 32 extending from two ends thereof and symmetrical to each other. The support frame 30 is mounted right under the main body 20 such that the loop portion 31 is received in the connection slot 28, and that the support arms 32 are kept an appropriate distance away from the underside of the main body 20. After the loop portion 31 is lodged in the connection slot 28 of the main body 20, the front end of the underside of the main body 20 is provided with a press cover 29 fastened therewith by a screw 35.

The connection seat 40 is integrally made of a rigid plastic material and has a body 41, which is provided at two opposite ends with a disklike side end portion 42 which is in turn provided at the front side with a sleeve 43 extending therefrom and facing forward, and at the top with a round lower insertion slot 44 having at the center thereof a protruded pillar 45 extending upwards. The connection seat 40 is disposed at the rear end of the bottom of the main body 20 such that the rear ends of the two support arms 32 are securely fitted into the two sleeves 43, and that the two lower insertion slots 44 are opposite in location to the two upper insertion slots 26 of the main body 20.

The block bodies 50 are made of a plastic foam material, such as a microcellular polyurethane elastomer containing polyester alcohol and naphthalene disocyanate. The elastic block bodies 50 are of a cylindrical construction and are provided in the periphery with two annular grooves 51, and in the center with a through hole 52 extending along the longitudinal direction thereof. The block bodies 50 are disposed between the connection seat 40 and the main body 20 such that the two block bodies 50 are opposite in location to each other, and that two ends of the top and the bottom of the block bodies 50 are inserted into the upper insertion slots 26 of the main body 20 and the lower insertion slots 44 of the connection seat 40 in conjunction with an adhesive, and that the ends of the block bodies 50 are flush with the undersides of the insertion slots 26 and 44. The protruded pillars 27 and 45 of the upper insertion slots 26 and the lower insertion slots 44 are extended into the through holes 52 of the block bodies 50 such that the tail ends of the protruded pillars 27 and 45 are separated from each other by an appropriate distance at such time when the block bodies 50 are not exerted on by an external force.

The bicycle saddle 10 of the present invention is mounted on the bicycle seat post by means of a mount (not shown in the drawing) which holds securely the two support arms 32 of the support frame 30.

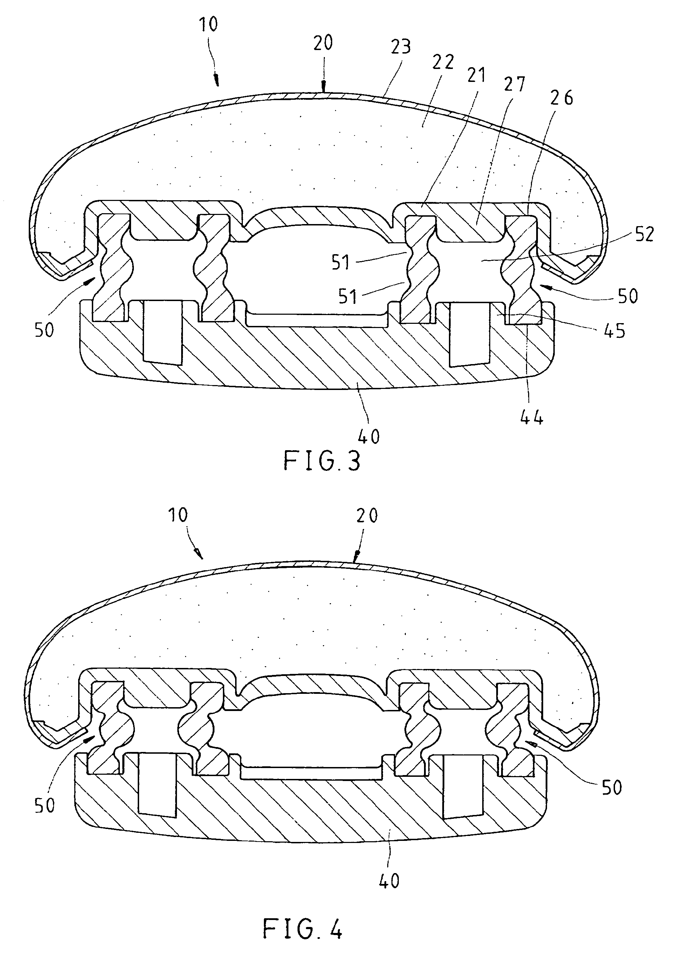

As shown in FIGS. 3 and 4, the two elastic block bodies 50 are securely located under two opposite sides of the main body 20 to serve as shock-absorbing bodies which are compressed to absorb shock that is brought about by the bicycle in motion. When the bicycle is operated on a bumpy road, the shock is more severe due to the main body 20 being exerted on by a severe upward force of the bicycle seat post on which the saddle 10 is mounted. The annular grooves 51 of the block bodies 50 serve to enable the block bodies 50 to compress effectively to absorb the shock, as shown in FIG. 4. As soon as the block bodies 50 are relieved of the external force exerting thereon, the compressed block bodies 50 return to their original shape. The block bodies 50 are relatively light in weight and quiet while in action.

## Claims

1. A bicycle saddle comprising:
a main body (20) having a front end (25) and a rear end (24) greater in width than said front end (25);
a support frame (30) disposed at a bottom of said main body (20) and formed of a U-shaped loop portion (31) fastened with a front end of an underside of said main body (20), and two support arms (32) extending from said loop portion (31) such that said support arms (32) are kept an appropriate distance away from the underside of said main body (20);
a connection seat (40) located at a rear end of the bottom of said main body (20) and provided with a body (41) which is in turn provided at each of two opposite ends thereof with a side end portion (42) connected therewith; and
two elastic block bodies (50) disposed between said main body (20) and said connection seat (40) such that said two elastic block bodies (50) are opposite in location to each other, and that said block bodies (50) are in contact at a bottom thereof with a top of said side end portion of said connection seat (40), and further that said block bodies (50) are in contact at a top thereof with the underside of a rear end of said main body (20); **characterized in that:**
said side end portions (42) are provided with a sleeve (43) extending therefrom such that each said side end portion (42) is fastened with one end of one of said two support arms (32) by fitting said sleeve over said one end.

2. The bicycle saddle as defined in claim 1, wherein said bottom and said top of said block bodies are attached by an adhesive to said underside of said rear end of said main body (20) and said top of said side end portion of said connection seat (40).

3. The bicycle saddle as defined in claim 1 or 2, wherein said underside of said rear end of said main body and said top of said side end portion of said connection seat are provided with an insertion slot (26, 44) for receiving an end portion of said block bodies (50).

4. The bicycle saddle as defined in any one of the preceding claims, wherein said block bodies (50) are provided with a longitudinal through hole (52); wherein said underside of said rear end of said main body and said top of said side end portion of said connection seat are provided with a protruded pillar (27, 45) which is extended into said through hole (52) of said block bodies (50), with said protruded pillars (27, 45) being separated from each other by a distance at such time when said block bodies (50) are not deformed.

5. The bicycle saddle as defined in any one of the preceding claims, wherein said block bodies (50) are provided in a periphery with a plurality of annular grooves (51).

6. The bicycle saddle as defined in any one of the preceding claims, wherein said block bodies (50) are made of a plastic foam material.

7. The bicycle saddle as defined in claim 6, wherein each of said block bodies (50) is a microcellular elastomer of polyurethane.

8. The bicycle saddle as defined in claim 7, wherein said elastomer contains polyester alcohol and naphthalene disocyanate.

9. A bicycle saddle as defined in any one of the preceding claims, wherein the elastic block bodies (50) are located on opposite sides of said main body (20).

10. The bicycle saddle as defined in claim 1, wherein said side end portion is further provided with a round lower insertion slot (44) having at a centre thereof a protruded pillar (45) extending upwards.

## Patentansprüche

1. Fahrradsattel, umfassend:
einen Hauptkörper (20) mit einem vorderen Ende (25) und einem hinteren Ende (24), das breiter ist als das vordere Ende (25);
einen am Boden des Hauptkörpers (20) befindlichen Stützrahmen (30), welcher gestaltet ist aus einem U-förmigen Schleifenabschnitt (31), der an einem vorderen Ende einer Unterseite von Hauptkörper (20) befestigt ist, und zwei Stützarmen (32), die sich von dem Schleifenabschnitt (31) erweitern, so dass die Stützarme (32) von der Unterseite des Hauptkörpers (20) auf einem geeigneten Abstand gehalten werden;
ein am hinteren Ende des Bodens von Hauptkörper (20) befindliches Verbindungsauflager (40), das einen Körper (41) aufweist, der wiederum an seinen beiden gegenüberliegenden Enden jeweils mit einem damit verbundenen seitlichen Endabschnitt (42) versehen ist, und
zwei elastische Blockkörper (50), die sich zwischen dem Hauptkörper (20) und dem Verbindungsauflager (40) befinden, so dass sich die beiden elastischen Blockkörper (50) einander gegenüber befinden, und dass die Blockkörper (50) an ihrem Boden mit der Oberseite des seitlichen Endabschnitts des Verbindungsauflagers (40) in Kontakt sind, und dass die Blockkörper (50) zudem an ihrer Oberseite mit der Unterseite eines hinteren Endes von Hauptkörper (20) in Kontakt sind; **dadurch gekennzeichnet, dass** die seitlichen Endabschnitte (42) eine Manschette (43) aufweisen, die davon so absteht, dass die seitlichen Endabschnitte (42) jeweils an einem Ende von einem der beiden Stützarme (32) befestigt werden, indem die Manschette über das eine Ende geschoben wird.

2. Fahrradsattel nach Anspruch 1, wobei der Boden und die Oberseite der Blockkörper mit einem Klebstoff an der Unterseite des hinteren Endes von Hauptkörper (20) und der Oberseite des seitlichen Endabschnitts von Verbindungsauflager (40) befestigt sind.

3. Fahrradsattel nach Anspruch 1 oder 2, wobei die Unterseite des hinteren Endes des Hauptkörpers und die Oberseite des seitlichen Endabschnitts des Verbindungsauflagers eine Einführnut (26, 44) aufweisen, die einen Endabschnitt der Blockkörper (50) aufnimmt.

4. Fahrradsattel nach einem der vorhergehenden Ansprüche, worin die Blockkörper (50) eine längs verlaufende durchgehende Öffnung (52) aufweisen; wobei die Unterseite des hinteren Endes des Hauptkörpers und die Oberseite des seitlichen Endabschnitts des Verbindungsauflagers eine vorstehende Säule (27, 45) aufweisen, die in die durchgehende Öffnung (52) der Blockkörper (50) ragt, wobei die vorstehenden Stützen (27, 45) an dem Zeitpunkt, an dem die Blockkörper (50) nicht verformt sind, in einem Abstand voneinander getrennt sind.

5. Fahrradsattel nach einem der vorhergehenden Ansprüche, wobei die Blockkörper (50) an der Außenseite eine Anzahl ringförmiger Rillen (51) aufweisen.

6. Fahrradsattel nach einem der vorhergehenden Ansprüche, wobei die Blockkörper (50) aus einem Schaumstoffmaterial bestehen.

7. Fahrradsattel nach Anspruch 6, wobei die Blockkörper (50) jeweils ein mikrozelluläres Elastomer aus Polyurethan sind.

8. Fahrradsattel nach Anspruch 7, wobei das Elastomer Polesteralkohol und Naphthalindiisocyanat enthält.

9. Fahrradsattel nach einem der vorhergehenden Ansprüche, wobei sich die elastischen Blockkörper (50) auf gegenüberliegenden Seiten des Hauptkörpers (20) befinden.

10. Fahrradsattel nach Anspruch 1, wobei der Endabschnitt zudem eine runde untere Einführnut (44) aufweist, in deren Mitte sich eine aufrecht stehende Säule (45) befindet.

## Revendications

1. Selle de bicyclette comprenant :
- un organe principal (20) ayant une extrémité avant (25) et une extrémité arrière (24) plus importante en largeur que ladite extrémité avant (25) ;
- un bâti de support (30) disposé au niveau d'une face inférieure dudit organe principal (20) et formé d'une partie de boucle en forme de U (31), fixée à une extrémité avant du dessous dudit organe principal (20), et de deux bras de support (32) s'étendant depuis ladite partie de boucle (31), de sorte que lesdits bras de support (32) soient maintenus à une distance appropriée du dessous dudit organe principal (20) ;
- une surface de connexion (40) positionnée à une extrémité arrière de la face inférieure dudit organe principal (20) et pourvue d'un organe (41) à son tour muni à chacune de deux extrémités opposées de celui-ci d'une partie d'extrémité latérale (42) connectée à celui-ci ; et
- deux organes massifs élastiques (50) disposés entre ledit organe principal (20) et ladite surface de connexion (40), de sorte que lesdits deux organes massifs élastiques (50) soient positionnés à des emplacements opposés l'un à l'autre, que lesdits organes massifs (50) soient en contact, au niveau d'une face inférieure de ceux-ci, avec une face supérieure de ladite partie d'extrémité latérale de ladite surface de connexion (40) et, en outre, que lesdits organes massifs (50) soient en contact, au niveau d'une face supérieure de ceux-ci, avec le dessous de l'extrémité arrière dudit organe principal (20) ; **caractérisé en ce que :**
- lesdites parties d'extrémités latérales (42) sont pourvues d'un manchon (43) s'étendant depuis celles-ci, de sorte que chacune desdites parties d'extrémités latérales (42) soit fixée à une extrémité d'un desdits deux bras de support (32) en emmanchant ledit manchon sur ladite extrémité.

2. Selle de bicyclette selon la revendication 1, dans laquelle ladite face inférieure et ladite face supérieure desdits organes massifs sont fixées par un adhésif audit dessous de ladite extrémité arrière dudit organe principal (20) et à ladite face supérieure de ladite partie d'extrémité latérale de ladite surface de connexion (40).

3. Selle de bicyclette selon la revendication 1 ou 2, dans laquelle ledit dessous de ladite extrémité arrière dudit organe principal et ladite face supérieure de ladite partie d'extrémité latérale de ladite surface de connexion sont pourvus d'une rainure d'insertion (26, 44) pour recevoir une partie d'extrémité desdits organes massifs (50).

4. Selle de bicyclette selon l'une quelconque des revendications précédentes, dans laquelle lesdits organes massifs (50) sont pourvus d'un trou traversant longitudinal (52) ; dans laquelle ledit dessous de ladite extrémité arrière dudit organe principal et ladite face supérieure de ladite partie d'extrémité latérale de ladite surface de connexion sont pourvus d'une colonne protubérante (27, 45) s'étendant dans ledit trou traversant (52) desdits organes massifs (50), lesdites colonnes protubérantes (27, 45) étant séparées l'une de l'autre par une certaine distance lorsque lesdits organes massifs (50) ne sont pas déformés.

5. Selle de bicyclette selon l'une quelconque des revendications précédentes, dans laquelle lesdits organes massifs (50) sont pourvus à leurs périphéries d'une pluralité de cannelures annulaires (51).

6. Selle de bicyclette selon l'une quelconque des revendications précédentes, dans laquelle lesdits organes massifs (50) sont faits en une mousse d'un matériau plastique.

7. Selle de bicyclette selon la revendication 6, dans laquelle chacun desdits organes massifs (50) est un élastomère microcellulaire de polyuréthane.

8. Selle de bicyclette selon la revendication 7, dans laquelle ledit élastomère contient un alcool de polyester et un diisocyanate de naphtalène.

9. Selle de bicyclette selon l'une quelconque des revendications précédentes, dans laquelle les organes massifs élastiques (50) sont positionnés sur des côtés opposés dudit organe principal (20).

10. Selle de bicyclette selon la revendication 1, dans laquelle ladite partie d'extrémité latérale est en outre pourvue d'une rainure d'insertion inférieure circulaire (44) ayant en son centre une colonne protubérante (45) s'étendant vers le haut.
